# EUROPÄISCHE PATENTSCHRIFT

(11) **EP 2 439 003 B1**
(45) Veröffentlichungstag und Bekanntmachung des Hinweises auf die Patenterteilung: **26.11.2014**
(21) Anmeldenummer: 11007251.9
(22) Anmeldetag: 07.09.2011
(51) Int. Cl.: B08B 15/02, B01D 53/00

(54) **Anordnung zur Absaugung von Dampfschwaden aus einem Behandlungsraum einer Wasch- oder Reinigungsanlage und Absaugvorrichtung**
Assembly for extracting steam from a treatment area of a washing or cleaning assembly and aspiration device
Agencement d'aspiration de vapeurs à partir d'un espace de traitement d'une installation de lavage ou de nettoyage et dispositif d'aspiration

(30) Priorität: 11.10.2010 DE 202010014092 U
(43) Veröffentlichungstag der Anmeldung: 11.04.2012
(73) Patentinhaber: Zippel GmbH & Co. KG Maschinenfabrik, 93073 Neutraubling (DE)
(72) Erfinder: Zippel, Günther, sen., 93073 Neutraubling (DE)
(74) Vertreter: Graf Glück Kritzenberger

(56) Entgegenhaltungen:
- DE-A1- 3 737 783
- DE-A1- 10 020 205
- US-A- 4 098 616
- US-A- 5 205 303
- US-A- 5 769 912

## Beschreibung

Die Erfindung betrifft eine Anordnung zur Absaugung von Dampfschwaden aus zumindest einem Behandlungsraum einer Wasch- oder Reinigungsanlage oder einer ähnlichen Anlage mit Dampfentwicklung gemäß dem Oberbegriff des Patentanspruches 1 bzw. eine Absaugvorrichtung nach dem Oberbegriff des Anspruchs 7.

Vorrichtungen zur Absaugung von Dampfschwaden aus einer Behandlungskammer einer Wasch- oder Reinigungsanlage sind hinreichend aus dem Stand der Technik bekannt. Insbesondere bei bekannten Absaugvorrichtungen finden mehrere Filter, Magnetabscheider oder Kältefallen zur Absaugungen von Dampfschwaden Anwendung. Nachteilig erfordern derartige bekannte Absaugvorrichtungen jedoch die Zu- und Abfuhr von Luft, wodurch insbesondere ein Energieverlust auftreten kann. Auch ist das Vorhalten von Einrichtungen zur Zu- und Abfuhr von Luft technisch aufwendig und kostenintensiv.

Aus der US 4 098 616 A ist eine haubenartige Absaugvorrichtung für einen Geschirrspüler zu entnehmen, welche einen offenen Behandlungsraum vergleichbar mit einer Wasch- oder Reinigungskammer aufweist. Die haubenartige Absaugvorrichtung ist über vorhangartige Isolationswände seitlich abgeschlossen und nach unten geöffnet ist.

Ferner ist aus der US 5 769 912 A ein System zur Dampfrückgewinnung einer Wasch- oder Reinigungsanlage für industrielle Bauteile bekannt, bei dem der in der Reinigungskammer erzeugte Dampf in einen oberhalb der Reinigungskammer angeordneten Behandlungsraum angesaugt wird.

Ausgehend hiervon ist es Aufgabe der vorliegenden Erfindung, eine Anordnung zur Absaugung von Dampfschwaden aus zumindest einem ersten Behandlungsraum einer Wasch- oder Reinigungsanlage oder einer ähnlichen Anlage mit Dampfentwicklung anzugeben, welche die Nachteile bekannter Absaugvorrichtungen beseitigt, insbesondere keine Zu- und Abfuhr von Luft erfordert. Die Aufgabe wird ausgehend vom Oberbegriff des Patentanspruches 1 durch dessen kennzeichnende Merkmale gelöst.

Der wesentliche Aspekt der Erfindung ist darin zu sehen, dass der erste und zweite Behandlungsraum über eine Durchlassöffnung miteinander verbunden sind, dass der erste und zweite Behandlungsraum über zumindest einen Durchlass miteinander verbunden sind, dass im zweiten Behandlungsraum Mittel zur Absaugung von im ersten Behandlungsraum entstehenden Dampfschwaden über den zumindest einen Durchlass in den zweiten Behandlungsraum vorgesehen sind, und dass die Absaugvorrichtung eine Kühlanordnung aufweist, die sich zumindest teilweise entlang der Innenseite der Gehäusewandung erstreckt. Besonders vorteilhaft sind bei der erfindungsgemäßen Absaugvorrichtung keine Einrichtungen zum Zu- und/oder Abführung von Luft erforderlich, so dass dem System nahezu keine Wärmeenergie entzogen wird.

Weiterhin vorteilhaft ist die Kühlanordnung durch eine Mantelkühlung gebildet, wobei diese wiederum durch mehrere Kühlschlangen gebildet sein kann, die entlang der Innenseite der Gehäusewandung verlaufen.

In einer weiteren vorteilhaften Ausführungsvariante sind die Absaugmittel durch eine Propeller- oder Rotationskugelanordnung gebildet, welche über eine Welle von einer Motoreinheit antreibbar sind, und zwar um eine Antriebsachse. Diese sind insbesondere zur Erzeugung einer Sog- und/oder Wirbelwirkung im zweiten Behandlungsraum vorgesehen. Ferner weist die Absaugvorrichtung einen becken- oder wannenartigen Bodenbereich auf, über welchen das mittels der Kühlanordnung erzeugte Kondensat über dem Durchlass in den ersten Behandlungsraum abfließt.

Die Erfindung betrifft ebenfalls eine Absaugvorrichtung nach Anspruch 7 zur Verwendung in einer erfindungsgemäßen Anordnung bestehend aus einer einen Behandlungsraum einschließenden Gehäusewandung, bei der an der Unterseite ein Durchlass vorgesehen ist, bei der Mittel zur Erzeugung einer Sog- und/oder Wirbelwirkung im Behandlungsraum vorgesehen sind, und bei der eine Kühlanordnung vorgesehen ist, die sich zumindest teilweise entlang der Innenseite der Gehäusewandung erstreckt.

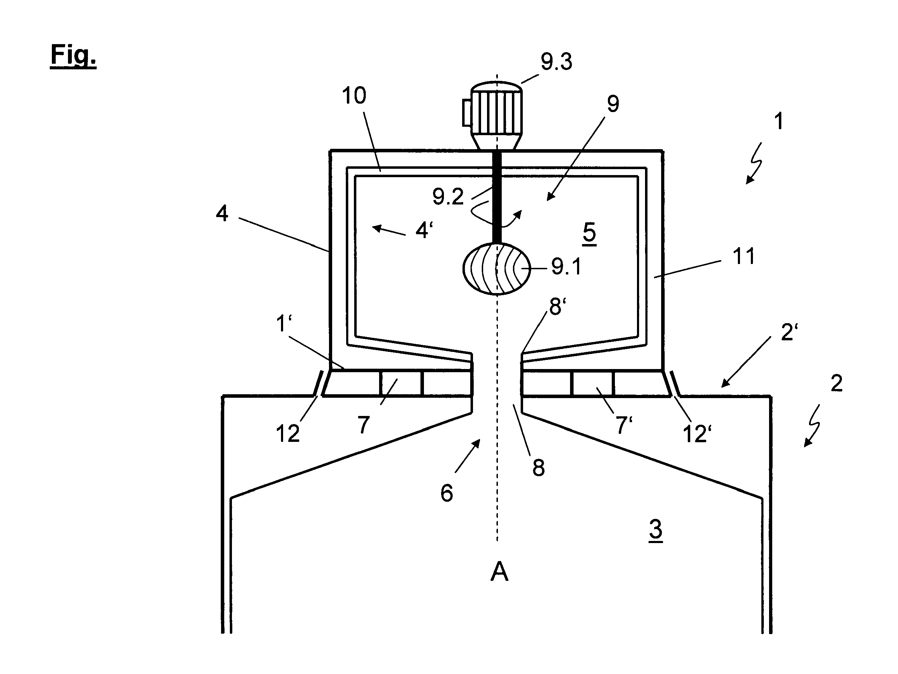

Die Erfindung soll nachfolgend anhand von einem Ausführungsbeispiel im Zusammenhang mit einer Figur näher erläutert werden. Zudem ergeben sich Weiterbildungen, Vorteile und Anwendungsmöglichkeiten der Erfindung auch aus der nachfolgenden Beschreibung des Ausführungsbeispiels und der Figur. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht. Es wird aber ausdrücklich darauf hingewiesen, dass die Erfindung keinesfalls auf die angegebenen Beispiele beschränkt sein soll.

In der Figur ist beispielhaft eine Absaugvorrichtung 1 dargestellt, welche oberhalb einer Wasch- oder Reinigungsanlage 2 angeordnet ist. Die Wasch- und Reinigungsanlage 2 schließt hierbei zumindest einen ersten Behandlungsraum 3 ein, in welcher Gegenstände, beispielsweise industrielle Bauteile oder Gebinde von derartigen Bauteilen durch Zuführung einer vorzugsweise warmen Reinigungsflüssigkeit gereinigt werden. Vorzugsweise weist die Reinigungsflüssigkeit eine Temperatur zwischen 60° und 65° C auf.

Im Rahmen der Reinigung der Gegenstände entstehen in der Wasch- und Reinigungsanlage 2 Dampfschwaden, welche aus dem ersten Behandlungsraum 3 zu entfernen sind, um eine optimale Reinigungsqualität zu erzielen. Hierzu ist die erfindungsgemäße Anordnung zur Absaugung von Dampfschwaden aus dem zumindest einen ersten Behandlungsraum 3 einer Wasch- und Reinigungsanlage 2 vorgesehen, welche vorzugsweise im Bereich der industriellen Reinigung-, Entfettungs- und Trocknungstechnik Anwendung findet. Selbstverständlich kann die Erfindung bei ähnlichen Anlagen mit Dampfentwicklung zum Einsatz kommen, bei denen beim Betrieb eine Kondensation des entstehenden Dampfes ebenfalls erforderlich ist.

Die Wasch- und Reinigungsanlage 2 weist beispielsweise eine ebene Oberseite 2' auf, auf der eine erfindungsgemäße Absaugvorrichtung 1 montiert ist. Die Absaugvorrichtung 1 kann somit auch einfach bei bestehenden Wasch- oder Reinigungsanlagen 2 nachgerüstet werden. Der Grundkörper der Absaugvorrichtung 1 ist durch eine Gehäusewandung 4 gebildet, welche einen vorzugsweise im Querschnitt runden, ovalen oder viereckigen zweiten Behandlungsraum 5 einschließt. Der erste und zweite Behandlungsraum 3, 5 sind über zumindest einen Durchlass 6 miteinander verbunden, und zwar derart, dass im ersten Behandlungsraum 3 erzeugte Dampfschwaden über den zumindest einen Durchlass 6 in den zweiten Behandlungsraum 5 entweichen können.

Vorzugsweise ist die Absaugeinrichtung 1 als separate Einheit ausgebildet, welche auf der Oberseite 2' der Wasch- und Reinigungsanlage 2 aufgesetzt und mit dieser über beispielsweise Befestigungsvorrichtungen 7, 7' verbunden ist, und zwar ist die Außen bzw. Unterseite 4' der Gehäusewandung 4 der Absaugvorrichtung 1 mit der Oberseite 2' der Wasch- oder Reinigungsanlage 2 über die Befestigungsvorrichtungen 7, 7'verbunden.

Der Durchlass 6 kann beispielsweise durch eine in der Oberseite 2' der Wasch- oder Reinigungsanlage 2 vorgesehen Öffnung 8 und eine gegenüberliegende, in der Unterseite 1' der Absaugvorrichtung 1 vorgesehene weitere Öffnung 8' gebildet sein, welche beispielsweise über eine Durchlasshülse miteinander flüssigkeits- und dampfdicht verbunden sind.

Ferner sind im zweiten Behandlungsraum 5' Mittel 9 zur Absaugung von im ersten Behandlungsraum 3 entstehenden Dampfschwaden über den Durchlass 6 in den zweiten Behandlungsraum 5 vorgesehen. Die Absaugmittel 9 sind ferner zur Verteilung der im zweiten Behandlungsraum 5 befindlichen Dampfschwaden ausgebildet.

In einer bevorzugten Ausführungsform sind die Absaugmittel 9 durch eine Propeller- oder Rotationskugelanordnung 9.1 gebildet, welche über zumindest eine Welle 9.2 mit einer außerhalb der Absaugvorrichtung 1 vorgesehenen Motoreinheit 9.3 um eine Antriebsachse A antreibbar sind. Hierbei ist die Propeller- oder Rotationskugelanordnung 9.1 vorzugsweise u zentral im zweiten Behandlungsraum 5 angeordnet. Mittels genannter Absaugmittel 9 wird somit eine Sogwirkung oberhalb des Durchlasses 6 erzeugt und gleichzeitig die bereits im zweiten Behandlungsraum 5 befindlichen Dampfschwaden verteilt, und zwar vorzugsweise in radialer Richtung ausgehend von der zentral angeordneten Propeller- oder Rotationskugelanordnung 9.1. Besonders vorteilhaft ist die Rotationskugelanordnung 9.1 durch eine Rotationskugel mit Schaufellamellen gebildet, welche beispielsweise aus V2A-Stahl hergestellt ist und über welche eine Sog- und/oder Wirbelwirkung in dem zweiten Behandlungsraum 5 erzeugt wird. Weiterhin sind die Drehzahl und Größe der Schaufellamellenfläche abhängig von der Größe der ersten und/oder zweiten Behandlungsräume 3, 5 gewählt, wobei die Drehzahl beispielsweise im Bereich von 2500 bis 3500 U/min, vorzugsweise 3000 U/min liegt.

Die Dampfschwaden werden an eine im Bereich der Innenseite 4' der Gehäusewandung 4 vorgesehene Kühlanordnung 10 geführt, welche die Dampfschwaden abkühlt und damit eine Kondensierung der Dampfschwaden erreicht.

Das dadurch entstehende Kondensat fließt über die Seitenwände in Richtung Durchlass 6 ab. Die Kühlanordnung 10 ist beispielsweise durch eine Mantelkühlung bestehend aus mehreren Kühlschlangen gebildet, welche vorzugsweise entlang der Innenseite 4' der Gehäusewandung 4 angeordnet sind. Die Mantelkühlung kann entweder frei zugänglich oder verdeckt ausgebildet sein, so dass die Kondensierung unmittelbar an der Mantelkühlung oder einer in Richtung der zentral angeordneten Propeller- oder Rotationskugelanordnung 9.1 vorgeschalteten Zwischenwand erfolgt. Die Mantelkühlung weist beispielsweise eine Kühltemperatur zwischen -8° und -3° C, vorzugsweise ca. -5° C auf.

Ferner ist entweder zwischen der Gehäusewandung 4 und der Kühlanordnung 10 eine Isolationsschicht 11 vorgesehen oder die Gehäusewandung 4 selbst zumindest im Bereich der Innenseite 4' aus einem isolierenden Material hergestellt.

In einer bevorzugten Ausführungsform verläuft die Innenseite 4' der Gehäusewandung 4 bzw. die Kühlanordnung 10 von außen schräg nach innen, und zwar in Richtung des Durchlasses 6 bzw. der Öffnung 8', so dass die Absaugvorrichtung 1 im Bereich der Unterseite 1' ein trichterförmiger oder becken- oder wannenartig Boden ausgebildet, dessen tiefst gelegener Bodenbereich in den Durchlass 6 mündet. Aufgrund dieser trichterförmigen oder becken- oder wannenartigen Ausbildung des Bodenbereiches kann das mittels der Kühlanordnung 10 erzeugte Kondensat über die inneren Seitenwände, den schräg nach innen verlaufenden Boden in den Durchlass 6 und über diesen in den ersten Behandlungsraum 3 abfließen. Auch kann im Bereich des Durchlasses 6 bzw. zwischen den Öffnungen 8, 8' eine nicht in den Figuren dargestellte rinnenartige Aufnahme vorgesehen sein, welche verbunden mit einem Leitungsrohr oder einem Schlauch das erzeugte Kondensat in die Wasch- oder Reinigungskammer 2 oder direkt einen Laugen- oder Spülbehälter abführt. Damit wird das rückgewonnene Kondensat dem Reinigungsprozess erneut zugeführt.

Ferner können Schwitzwasserrückführungen 12, 12' vorgesehen sein, welche die an der Außenseite der Absaugvorrichtung 1" bzw. der Gehäusewandung 4 im Betrieb auftretende Schwitzwasser über die Oberseite 2' der Wasch- oder Reinigungskammer 2 in den ersten Behandlungsraum 3 zurückführen. Diese sind vorzugsweise hülsenartig ausgebildet und beispielsweise im Bereich der Außenseiten der Absaugvorrichtungen 1 vorgesehen.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Absaugvorrichtung
- 1': Unterseite
- 2: Wasch- oder Reinigungsanlage
- 2': Oberseite
- 3: erster Behandlungsraum
- 4: Gehäusewandung
- 4': Innenseite
- 5: zweiter Behandlungsraum
- 6: Durchlass
- 7, 7': Befestigungsvorrichtung
- 8, 8': Öffnungen
- 9: Absaugmittel
- 9.1: Propeller oder Rotationskugelanordnung
- 9.2: Welle
- 9.3: Motoreinheit
- 10: Kühlanordnung
- 11: Isolationsschicht
- 12, 12': Schwitzwasserrückführung

- A: Antriebsachse

## Patentansprüche

1. Anordnung zur Absaugung von Dampfschwaden aus zumindest einem ersten Behandlungsraum (3) einer Wasch- oder Reinigungsanlage (2) für industrielle Bauteile oder Gebinde von derartigen Bauteilen umfassend zumindest eine oberhalb der Wasch- oder Reinigungskammer (2) angeordnete Absaugvorrichtung (1), deren Gehäusewandung (4) einen zweiten Behandlungsraum (5) einschließt, dass der erste und zweite Behandlungsraum (3, 5) über einen Durchlass (6) miteinander verbunden sind, dass im zweiten Behandlungsraum (5) Mittel (9) zur Absaugung von im ersten Behandlungsraum (3) entstehenden Dampfschwaden über den Durchlass (6) in den zweiten Behandlungsraum (5) vorgesehen sind, und dass die Absaugvorrichtung (1) eine Kühlanordnung (10) aufweist, die sich zumindest teilweise entlang der Innenseite (4') der Gehäusewandung (4) erstreckt, **dadurch gekennzeichnet, dass** die Absaugvorrichtung (1) einen trichterförmigen oder becken- oder wannenartigen Bodenbereich aufweist, dessen tiefst gelegener Bodenbereich in den Durchlass (6) mündet und dass das mittels der Kühlanordnung (10) erzeugte Kondensat über den Durchlass (6) in den ersten Behandlungsraum (3) abfließt.

2. Anordnung nach Anspruch 1, **dadurch gekennzeichnet, dass** die Kühlanordnung (10) zur Kondensierung der Dampfschwaden ausgebildet ist.

3. Anordnung nach Anspruch 1 oder 2, **dadurch gekennzeichnet, dass** die Kühlanordnung (10) durch eine Mantelkühlung gebildet ist.

4. Anordnung nach Anspruch 3, **dadurch gekennzeichnet, dass** die Mantelkühlung (10) durch mehrere Kühlschlangen gebildet ist, die entlang der Innenseite der Gehäusewandung (4) verlaufen.

5. Anordnung nach einem der Ansprüche 1 bis 4, **dadurch gekennzeichnet, dass** die Absaugmittel (9) durch eine Propeller- oder Rotationskugelanordnung (9.1) gebildet sind, welche über eine Welle (9.2) von einer Motoreinheit (9.3) antreibbar sind, und zwar um eine Antriebsachse (A).

6. Anordnung nach einem der vorhergehenden Ansprüche, **dadurch gekennzeichnet, dass** die Absaugmittel (9) zur Erzeugung einer Sog- und/oder Wirbelwirkung im zweiten Behandlungsraum (5) vorgesehen sind.

7. Absaugvorrichtung (1) zur Verwendung in einer Anordnung gemäß der vorhergehenden Ansprüche bestehend aus einer einen Behandlungsraum (5) einschließenden Gehäusewandung (4), bei der an der Unterseite (1') ein Durchlass (6) vorgesehen ist und Mittel (9) zur Erzeugung einer Sog- und/oder Wirbelwirkung im Behandlungsraum (5) vorgesehen sind, und eine Kühlanordnung (10) vorgesehen ist, die sich zumindest teilweise entlang der Innenseite (4') der Gehäusewandung (4) erstreckt, **dadurch gekennzeichnet dass** die Absaugvorrichtung (1) einen trichterförmigen oder becken- oder wannenartigen Bodenbereich aufweist, dessen tiefst gelegener Bodenbereich in den Durchlass (6) mündet und dass das mittels der Kühlanordnung (10) erzeugte Kondensat zum Abfluss über den Durchlass (6) vorgesehen ist.

8. Absaugvorrichtung nach Anspruch 8, **dadurch gekennzeichnet, dass** die Kühlanordnung (10) zur Kondensierung der Dampfschwaden vorgesehen ist und durch eine Mantelkühlung gebildet ist.

## Claims

1. An assembly for aspirating steam from at least one treatment area (3) of a washing or cleaning assembly (2) for industrial components or casks of such components comprising at least one aspiration device (1) arranged above the washing or cleaning chamber (2), the housing wall (4) thereof enclosing a second treatment area (5), in that the first and second treatment areas (3, 5) are interconnected via a through-passage (6), in that in the second treatment area (5) means (9) are provided for extracting steam produced in the first treatment area (3) via the through-passage (6) into the second treatment area (5), and in that the aspiration device (1) has a cooling arrangement (10) which extends at least partially along the inner face (4') of the housing wall (4), **characterised in that** the aspiration device (1) has a hopper-shaped or bowl-like or trough-like base region, the lowest base region thereof opening into the through-passage (6) and **in that** the condensate produced by means of the cooling arrangement (10) is discharged via the through-passage (6) into the first treatment area (3).

2. The assembly according to claim 1, **characterised in that** the cooling arrangement (10) is designed for condensing the steam.

3. The assembly according to claim 1 or 2, **characterised in that** the cooling arrangement (10) is formed by jacket cooling.

4. The assembly according to claim 3, **characterized in that** the jacket cooling (10) is formed by a plurality of cooling coils which extend along the inner face of the housing wall (4).

5. The assembly according to one of claims 1 to 4, **characterised in that** the aspiration means (9) are formed by a propeller or rotating ball arrangement (9.1) which may be driven via a shaft (9.2) by a motor unit (9.3) and namely about a drive axle (A).

6. The assembly according to one of the preceding claims, **characterised in that** the aspiration means (9) are provided for producing a suction effect and/or vortex effect in the second treatment area (5).

7. An aspiration device (1) for use in an arrangement according to the preceding claims, consisting of a housing wall (4) enclosing a treatment area (5) in which a through-passage (6) is provided on the lower face (1') and means (9) are provided for producing a suction effect and/or vortex effect in the treatment area (5) and a cooling arrangement (10) is provided which extends at least partially along the inner face (4') of the housing wall (4), **characterised in that** the suction device (1) has a hopper-shaped or bowl-like or trough-like base region, the lowest base region thereof opening into the through-passage (6) and **in that** the condensate produced by means of the cooling arrangement (10) is intended for discharge via the through-passage (6).

8. The aspiration device according to claim 8, **characterised in that** the cooling arrangement (10) is provided for condensing the steam and is formed by jacket cooling.

## Revendications

1. Arrangement pour l'aspiration de vapeurs à partir d'au moins un premier espace de traitement (3) d'un système de lavage ou de nettoyage (2) pour des pièces de construction industrielles ou des emballages de telles pièces de construction, comprenant au moins un dispositif d'aspiration (1) agencé au-dessus de la chambre de lavage ou de nettoyage (2), dont la paroi de boîtier (4) inclut un deuxième espace de traitement (5), dans lequel le premier et le deuxième espace de traitement (3, 5) sont reliées entre eux par un passage (6), dans lequel il est prévu des moyens (9) pour l'aspiration de vapeurs apparaissant dans le premier espace de traitement (3) vers le deuxième espace de traitement (5) par le biais du passage (6), et dans lequel le dispositif d'aspiration (1) comporte un système de refroidissement (10) s'étendant au moins partiellement le long du côté intérieur (4') de la paroi de boîtier (4), **caractérisé en ce que** le dispositif d'aspiration (1) comporte une région de fond en forme d'entonnoir ou du genre baquet ou bassine, dont la région de fond la plus basse débouche dans le passage (6), et **en ce que** le condensat produit à l'aide du système de refroidissement (10) s'écoule dans le premier espace de traitement (3) par le biais du passage (6).

2. Arrangement selon la revendication 1, **caractérisé en ce que** le système de refroidissement (10) est conçu pour la condensation de vapeurs.

3. Arrangement selon la revendication 1 ou 2, **caractérisé en ce que** le système de refroidissement (10) est formé par une jaquette réfrigérante.

4. Arrangement selon la revendication 3, **caractérisé en ce que** la jaquette réfrigérante (10) est formée par plusieurs serpentins de réfrigération s'étendant le long du côté intérieur de la paroi de boîtier (4).

5. Arrangement selon l'une des revendications 1 à 4, **caractérisé en ce que** les moyens d'aspiration (9) sont formés par un système d'hélice ou de boule rotative (9.1) susceptible d'être entraîné par une unité de moteur (9.3) à l'aide d'un arbre (9.2), notamment autour d'un axe d'entraînement (A).

6. Arrangement selon l'une des revendications précédentes, **caractérisé en ce que** les moyens d'aspiration (9) sont conçus pour produire un effet d'aspiration et/ou de tourbillonnement dans le deuxième espace de traitement (5).

7. Dispositif d'aspiration (1) destiné à être utilisé dans un arrangement selon les revendications précédentes, constitué d'une paroi de boîtier (4) renfermant un espace de traitement (5), dans lequel un passage (6) est prévu du côté inférieur (1') et des moyens (9) pour la production d'un effet d'aspiration et/ou de tourbillonnement sont prévus dans l'espace de traitement (5), et dans lequel il est prévu un système de refroidissement (10) s'étendant au moins partiellement le long du côté intérieur (4') de la paroi de boîtier (4), **caractérisé en ce que**
le dispositif d'aspiration (1) comporte une région de fond en forme d'entonnoir ou du genre baquet ou bassine, dont la région de fond la plus basse débouche dans le passage (6), et **en ce que** le condensat produit à l'aide du système de refroidissement (10) est destiné à s'écouler par le passage (6).

8. Dispositif d'aspiration selon la revendication 8, **caractérisé en ce que** le système de refroidissement (10) est conçu pour la condensation de vapeurs et est formé par une jaquette réfrigérante.
